# EUROPÄISCHE PATENTSCHRIFT

(11) **EP 0 382 067 B1**
(45) Veröffentlichungstag und Bekanntmachung des Hinweises auf die Patenterteilung: **06.12.1995**
(21) Anmeldenummer: 90101868.9
(22) Anmeldetag: 31.01.1990
(51) Int. Cl.: C07F 9/54

(54) **3,7,11-Trimethyldodeca-2,4,6,10-tetraen-1-yl-phosphoniumsalze**
3,7,11-Trimethyl dodeca-2,4,6,10-tetraen-1-yl phosphonium salts
Sels de phosphonium du 3,7,11-triméthyldodéca-2,4,6,10-tétraènyle-1

(30) Priorität: 10.02.1989 CH 468/89
(43) Veröffentlichungstag der Anmeldung: 16.08.1990
(73) Patentinhaber: F. HOFFMANN-LA ROCHE AG, 4002 Basel (CH)
(72) Erfinder: Meyer, Karl, Dr., CH-4410 Liestal (CH)
(74) Vertreter: Cottong, Norbert A.

(56) Entgegenhaltungen:
- HELVETICA CHIMICA ACTA, Band 66, Fasc. 2, 16. März 1983; E. MÄRKI-FISCHER et al.: "43. Das Carotinoidspektrum der Hagebutten von Rosa pomifera: Nachweis von (5Z)-Neurosporin; Synthese von (3R,15Z)-Rubixanthin"

## Beschreibung

Die vorliegende Erfindung betrifft die Herstellung von 3,7,11-Trimethyldodeca-2,4,6,10-tetraen -1-yl-phosphoniumsalzen und von Lycopin sowie neue 3,7,11-Trimethyldodeca-2,4,6,10-tetraen -1-yl-phosphoniumsalze in diesem Verfahren.

Lycopin ist ein natürliches rotes Carotinoid, welches z.B. in Tomaten vorkommt.

Cartinoide werden meist durch Wittig-Reaktion aus Phosphoniumsalzen und Aldehyden hergestellt. Die verwendeten Phosphoniumsalze sind Salze starker Säuren - üblicherweise Halogenide, Sulfate oder Phosphate - und werden in der Regel aus den entsprechenden Alkoholen, Halogeniden etc. erhalten. Die Herstellung von Lycopin nach dieser Methode ergibt jedoch nur geringe Ausbeuten, wobei insbesondere bei der Herstellung der Phosphoniumsalze überwiegend unreaktive Nebenprodukte gebildet werden.

Es wurde nun gefunden, dass 3,7,11-Trimethyldodeca-2,4,6,10-tetraen -1-yl-phosphoniumalkanoate und -phosphonium-hydroxytrifluoroborate in hoher Ausbeute hergestellt werden können und dass sich diese ebenso leicht wie die üblichen Phosphoniumsalze starker Säuren durch Wittig-Reaktion weiter umsetzen lassen. Gewünschtenfalls können die Alkanoate und Hydroxytrifluoroborate vor der Umsetzung zu Lycopin in einfacher Weise in die Phosphoniumsalze der üblichen starken Säuren übergeführt werden, wobei letztere via die Alkanoate und Hydroxytrifluoroborate in wesentlich höherer Ausbeute erhalten werden können.

Die Erfindung betrifft daher ein Verfahren zur Herstelllung von Lycopin und intermediären Phosphoniumsalzen, welches dadurch gekennzeichnet ist, dass man 3,7,11-Trimethyldodeca-1,4,6,10-tetraen-3-ol der Formel 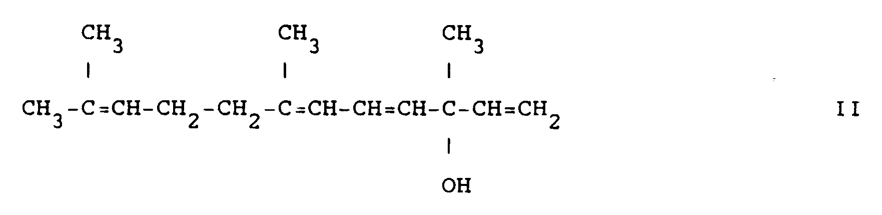
mit Triarylphosphin und mit C₁-C₆-Alkansäure oder Bortrifluorid-Aetherat zum Phosphoniumsalz der allgemeinen Formel 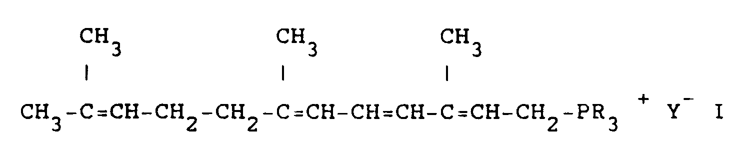
worin R Aryl und Y⁻ C₁-C₆-Alkanoat oder Hydroxyltrifluoroborat bedeuten,
umsetzt, gewünschtenfalls das Phosphoniumsalz der Formel I in das Phosphoniumsalz einer starken Säure überführt und, gewünschtenfalls, das erhaltene Phosphoniumsalz mit 2,7-Dimethyl-2,4,6-octatriendial zu Lycopin umsetzt.

Die Erfindung betrifft ebenfalls die neuen Phosphoniumsalze der Formel I.

Der obige Ausdruck "Aryl" bezeichnet übliche, in Phosphinen und Phosphoniumsalzen vorkommende Arylreste, wie Phenyl, Toluol, Naphthyl und dergleichen, insbesondere Phenyl.

Der Ausdruck "C₁-C₆-Alkanoat" bezeichnet das Anion geradkettiger oder verzweigter C₁-C₆-Alkansäuren, wie Ameisensäure, Essigsäure, Propionsäure, Buttersäure, Isobuttersäure, Valeriansäure, Isovaleriansäure und dergleichen. Bevorzugte Alkanoate sind Acetat und Formiat. Bevorzugte Alkansäuren sind dementsprechend Ameisensäure und Essigsäure.

Der Ausdruck "Hydroxytrifluoroborat" bezeichnet das Anion B(OH)F₃ ⁻.

Der Ausdruck "Bortrifluorid-Aetherat" umfasst übliche Aetherate von Bortrifluorid, insbesondere die Aetherate von geradkettigen, verzweigten oder cyclischen Aethern mit bis zu 8 Kohlenstoffatomen, wie Dimethyläther, Diäthyläther, Diisopropyläther, t-Butylmethyläther, Di-t-butyläther, Tetrahydrofuran und dergleichen. Besonders bevorzugt ist Bortrifluorid-Diäthylätherat.

Der Ausdruck "starke Säure" umfasst Halogenwasserstoffsäuren (insbesondere Salzsäure und Bromwasserstoffsäure), Schwefelsäure, Sulfonsäuren (wie Benzolsulfonsäure und Toluolsulfonsäure), Phosphorsäure und andere anorganische oder organische Säuren mit vergleichbarem Dissoziationsgrad. Der Ausdruck "Phosphoniumsalz einer starken Säure" bezeichnet somit die Phosphoniumhalogenide (insbesondere die Chloride und Bromide), -sulfate, -hydrogensulfate, -sulfonate, -phosphate und dergleichen.

Der Ausdruck "Halogen" bezeichnet im Rahmen der vorliegenden Erfindung Fluor, Chlor, Brom und Jod, insbesondere Chlor und Brom.

Die obige Formel I umfasst reine Isomere und Isomerengemische. Vorzugsweise liegt jedoch der in Formel I dargestellte 3,7,11-Trimethyldodeca-2,4,6,10-tetraen-1-yl-Rest - in der Literatur auch als ψ-Jonylidenäthyl-Rest oder Pseudojonylidenäthyl-Rest bezeichnet - in der all-E-Form vor. Die Phosphoniumsalze der Formel I und die daraus erhältlichen Phosphoniumsalze einer starken Säure sind somit vorzugsweise 3,7,11-Trimethyldodeca-2E,4E,6E,10-tetraen -1-yl-phosphoniumsalze (im folgenden als "all-E-Isomer" bezeichnet). Weitere bevorzugte Isomere sind die 3,7,11-Trimethyldodeca-2Z,4E,6E,10-tetraen -1-yl-phosphoniumsalze (im folgenden als "2Z-Isomer" bezeichnet) und die 3,7,11-Trimethyldodeca-2E,4E,6Z,10-tetraen -1-yl-phosphoniumsalze (im folgenden als "6Z-Isomer" bezeichnet).

Das in der erfindungsgemässen Umsetzung als Edukt verwendete 3,7,11-Trimethyldodeca-1,4,6,10-tetraen-3-ol (auch als Vinyl-ψ-jonol oder Vinylpseudojonol bezeichnet) ist bekannt z.B. aus Acta Chemica Scandinavica B29, 1015 (1975) und J. Chem. Soc. 1965, 2019 und kann nach bekannten Methoden aus Pseudojonon erhalten werden, z.B. durch Umsetzung mit Vinyl-Grignard-Reagens oder durch Umsetzung mit Lithium und Acetylen und anschliessende Partialhydrierung der Dreifachbindung in Gegenwart eines Lindlar-Katalysators. 3,7,11-Trimethyldodeca-1,4,6,10-tetraen-3-ol kann als Isomerengemisch oder reines Isomer verwendet werden. Isomerengemische können gewünschtenfalls durch fraktionierte Destillation getrennt werden.

Die Umsetzung von 3,7,11-Trimethyldodeca-1,4,6,10-tetraen-3-ol mit Triarylphosphin und mit C₁-C₆-Alkansäure oder Bortrifluorid-Aetherat kann in an sich bekannter Weise erfolgen. Das Triarylphosphin wird vorzugsweise in mindestens etwa äquimolaren Mengen, beispielsweise etwa 1-3 Aequivalenten eingesetzt. Besonders bevorzugt wird im allgemeinen ein kleiner Ueberschuss an Triarylphosphin verwendet, z.B. etwa 1,1-2 Aequivalente. Bevorzugtes Triarylphosphin ist Triphenylphosphin. Die Alkansäure bzw. das Bortrifluorid-Aetherat werden zweckmässigerweise in mindestens etwa äquimolaren Mengen verwendet. Bevorzugt ist in der Regel ein deutlicher Ueberschuss. Vorzugsweise werden daher im allgemeinen mindestens etwa 3 Aequivalente, insbesondere mindestens etwa 8 Aequivalente an Alkansäure bzw. Bortrifluorid-Aetherat eingesetzt. Bevorzugte Alkansäuren sind Ameisensäure und Essigsäure, bevorzugtes Bortrifluorid-Aetherat ist Bortrifluorid-Diäthylätherat. Die Umsetzung erfolgt zweckmässig in einem Lösungsmittel, wobei jedoch vorzugsweise die Alkansäure bzw. der dem verwendeten Aetherat entsprechende Aether selbst als Lösungsmittel dienen können und/oder dem Gemisch ein inertes organisches Lösungsmittel zugesetzt werden kann. Bevorzugte inerte organische Lösungsmittel sind gegebenenfalls chlorierte oder aromatische Kohlenwasserstoffe, Aether, Alkohole und Ester, wie Hexan, Methylenchlorid, Chloroform, Benzol, Toluol, Xylol, Diisopropyläther, t-Butylmethyläther, Tetrahydrofuran, Methanol, Aethanol, Aethylacetat und dergleichen.

Eine bevorzugte Ausführungsform des erfindungsgemässen Verfahrens betrifft die Umsetzung mit Ameisensäure in Gegenwart eines inerten organischen Lösungsmittels (insbesondere in Gegenwart eines gegebenenfalls chlorierten oder aromatischen Kohlenwasserstoffs). Eine weitere bevorzugte Ausführungsform ist die Umsetzung mit Essigsäure (oder allgemeiner mit C₂-C₆-Alkansäure) mit oder ohne Zusatz eines inerten organischen Lösungsmittels (beispielsweise eines gegebenenfalls chlorierten oder aromatischen Kohlenwasserstoffs). Eine dritte bevorzugte Ausführungsform ist die Umsetzung mit Bortrifluorid-Aetherat in Gegenwart eines inerten organischen Lösungsmittels (vorzugsweise eines gegebenenfalls chlorierten oder aromatischen Kohlenwasserstoffs oder eines Aethers).

Temperatur und Druck bei der Umsetzung von 3,7,11-Trimethyldodeca-1,4,6,10-tetraen-3-ol sind nicht kritisch. Im allgemeinen wird die Umsetzung bei etwa 0-100°C und unter Normaldruck durchgeführt. Bevorzugt ist ein Temperaturbereich von etwa 40-80°C, insbesondere etwa 50-65°C.

Das erhaltene Phosphoniumsalz der Formel I kann gewünschtenfalls aus dem Reaktionsgemisch isoliert werden. Da diese Phosphoniumsalze in isolierter Form jedoch weniger stabil sind, werden sie vorzugsweise ohne vorherige Isolierung direkt zum Lycopin weiter umgesetzt oder durch Anionenaustausch in stabilere Phosphoniumsalze übergeführt.

Der Anionenaustausch, d.h. die Ueberführung der Phosphoniumsalze der Formel I in entsprechende Phosphoniumsalze einer starken Säure kann durch Umsetzung mit starker Säure oder mit einem löslichen Salz der starken Säure erfolgen. Die Umsetzung kann vorzugsweise mit einer wässrigen Lösung der starken Säure oder des Salzes der starken Säure durchgeführt werden. Sie kann vorzugsweise im Rahmen der Aufarbeitung des Reaktionsgemisches enthaltend das Phosphoniumsalz der Formel I erfolgen, beispielsweise durch Waschen mit der wässrigen Lösung der Säure oder des Salzes. Bevorzugte lösliche Salze der starken Säuren sind die Alkalimetallsalze insbesondere die Natriumsalze und die Kaliumsalze. Bevorzugte starke Säuren sind Salzsäure, Bromwasserstoffsäure, Schwefelsäure, Phosphorsäure und Sulfonsäuren, wie Benzolsulfonsäure und Toluolsulfonsäure. Besonders bevorzugte Salze sind die Alkalimetallsalze dieser Säuren, wie Kochsalz, Kaliumchlorid, Natriumbromid, Natriumsulfat, Natriumhydrogensulfat, Natriumphosphat, Natriumtosylat und dergleichen. Besonders bevorzugt ist die Ueberführung in das Chlorid; sie kann vorzugsweise mit wässriger Salzsäure oder mit einer wässrigen Lösungs eines Alkalimetallchlorids (z.B. Kochsalz) erfolgen.

Die Ueberführung in das Phosphoniumsalz einer starken Säure durch Anionenaustausch ist in der Regel dann bevorzugt, wenn vor der Wittig-Reaktion eine Reinigung oder Isomerentrennung erfolgt. Andernfalls kann vorzugsweise das Phosphoniumsalz der Formel I direkt zu Lycopin weiter umgesetzt werden.

Die Umsetzung der Phosphoniumsalze der Formel I oder der entsprechenden Phosphoniumsalze starker Säuren mit 2,7-Dimethyl-2,4,6-octatriendial kann in an sich bekannter Weise und unter den für Wittig-Reaktionen üblichen Bedingungen erfolgen. Geeignete Bedingungen sind dem Fachmann bestens bekannt. Beispiele bevorzugter Methoden sind die Umsetzung in Methylenchlorid/Methanol in Gegenwart von Natriummethylat, in Toluol/Methanol in Gegenwart von Natriummethylat, in Aethanol in Gegenwart von Natriumäthylat oder in Methylenchlorid/Wasser in Gegenwart von Kaliumhydroxid oder -carbonat. Vorzugsweise erfolgt die Umsetzung bei etwa 0-50°C. Zur Herstellung von all-trans-Lycopin wird vorzugsweise 2,7-Dimethyl-2E,4E,6E-octatriendial eingesetzt. Die bei der Wittig-Reaktion neu entstehenden Doppelbindungen werden teilweise in der cis-Form gebildet. Sie können jedoch nach üblichen Methoden (z.B. thermisch) zur trans-Form isomerisiert werden. Die Isomerisierung erfolgt oft schon unter Reaktionsbedingungen.

Bei der Umsetzung von 3,7,11-Trimethyldodeca-1,4,6,10-tetraen-3-ol zum Phosphoniumsalz der Formel I bleibt die Konfiguration der Doppelbindung in Stellung 6 von 3,7,11-Trimethyldodeca-1,4,6,10-tetraen-3-ol weitgehend erhalten. Die Doppelbindung in Position 4 von Formel I wird in der Regel überwiegend in E-Form erhalten, unabhängig von der Konfiguration in Edukt. Die Doppelbindung in Position 2 von Formel I wird meist vorwiegend in E-Form gebildet mit einem geringen Anteil an Z-Form. Um Isomerisierungsreaktionen möglichst zu vermeiden, wird daher zur Herstellung von all-E-Lycopin vorzugsweise 3,7,11-Trimethyldodeca-1,4E,6E,10-tetraen-3-ol oder ein Isomerengemisch mit einem hohen Anteil an diesem Isomer umgesetzt. Aehnlich gut geeignet ist jedoch auch 3,7,11-Trimethyldodeca-1,4Z,6E,10-tetraen-3-ol.

Die vorliegende Erfindung wird durch die folgenden Beispiele weiter veranschaulicht. Die Ausbeute an Phosphoniumsalzen und die Isomerenverhältnisse wurden aus Stabilitätsgründen durch Hochdruck-Flüssigchromatographie (HPLC) mit internem Standard ermittelt. Die angegebenen Strukturen wurden durch Kernresonanzspektroskopie bestätigt.

### Beispiel 1

Ein Gemisch von 52,46 g Triphenylphosphin und 525 ml Eisessig wurde auf 55°C erwärmt und dann innert 10 Minuten tropfenweise mit einem Gemisch von 25,81 g 3,7,11-Trimethyldodeca-1,4E,6E,10-tetraen-3-ol (Reinheit 85,3%) und 15 ml Hexan versetzt. Dabei stieg die Temperatur auf 60°C. Das Gemisch wurde noch 2,5 Stunden bei 60°C gerührt und dann auf 25°C gekühlt.

Anschliessend wurde das Reaktionsgemisch enthaltend 3,7,11-Trimethyldodeca-2,4,6,10-tetraen -1-yl-triphenylphosphoniumacetat [Rf-Wert 0,41 (Butylacetat/Ameisensäure/Wasser 88:10:2)] mit 500 ml Methylenchlorid in einen Scheidetrichter gespült und, zwecks Ueberführung in das Chlorid, sechsmal mit je 500 ml 2-prozentiger Kochsalzlösung gewaschen. Die organische Phase wurde am Rotationsverdampfer eingeengt. Der Rückstand wurde in 200 ml Hexan und 300 ml Methanol/Wasser (Vol. 80:20) aufgenommen. Die Hexan-Phase wurde abgetrennt und die Methanol/Wasser-Phase noch viermal mit je 200 ml Hexan extrahiert. Die vereinigten Hexan-Phasen wurden zweimal mit je 20 ml Methanol/Wasser (Vol. 80:20) nachextrahiert. Die Methanol/Wasser-Phasen wurden am Rotationsverdampfer bei 40°C vom Methanol befreit. Die wässrige Lösung wurde mit 200 ml Methylenchlorid in einen Scheidetrichter gespült und dreimal mit je 200 ml 10-prozentiger Kochsalzlösung gewaschen. Die organische Phase wurde am Rotationsverdampfer eingeengt. Zur vollständigen Entfernung des Methylenchlorids wurde der Rückstand zweimal jeweils mit Aethylacetat versetzt und eingeengt. Das kristalline Rohprodukt wurde in Aethylacetat aufgenommen (total 420 g Gemisch) und durch Zugabe von 4,47 ml Methanol und Erwärmen auf 40°C in Lösung gebracht. Die Lösung wurde über Nacht bei Raumtemperatur stehen gelassen und dann filtriert. Der Nutschkuchen wurde mit Aethylacetat gewaschen.

Die Mutterlauge enthaltend das gewünschte Produkt wurde mittels HPLC mit internem Standard untersucht. Die Analyse ergab 36,67 g (73,2%) 3,7,11-Trimethyldodeca-2,4,6,10-tetraen -1-yl-triphenylphosphoniumchlorid bestehend aus 28,78 g (57,5%) all-E-Isomer, 5,62 g (11,2%) 2Z-Isomer und 2,27 g (4,5%) 6Z-Isomer. Rf-Wert 0,41 (Butylacetat/Ameisensäure/Wasser 88:10:2). Der Nutschkuchen, welcher weitere 7,19 g (14,3%) Produkt bestehend aus 2,13 g (4,2%) all-E-Isomer, 1,48 g (3,0%) 2Z-Isomer und 3,58 g (7.1%) 6Z-Isomer enthielt, wurde nicht aufgearbeitet.

Analoge Versuche (ohne Kristallisation) bei 40°C, 60°C und 80°C lieferten gemäss HPLC-Analyse folgende Ergebnisse:

| Temperatur | Reaktionszeit | chemische Ausbeute | Anteil an 6Z-Isomer |
|---|---|---|---|
| 40°C | 6,5 h | 70% | 8,6% |
| 60°C | 2,5 h | 96% | 10,9% |
| 80°C | 1,5 h | 96% | 11,7% |

### Beispiel 2

Ein Gemisch von 2,45 g Triphenylphosphin, 25 ml Methylenchlorid und 4 ml Eisessig wurde auf 40°C erwärmt und unter Argon innert 10 Minuten tropfenweise mit 1,53 g 3,7,11-Trimethyldodeca-1,4E,6Z,10-tetraen-3-ol (Reinheit 76,6%) versetzt. Das Reaktionsgemisch wurde über Nacht bei 40°C weiter gerührt und dann am Rotationsverdampfer eingeengt. Der Rückstand wurde mit 50 ml Methanol/Wasser (Vol. 80:20) in einen Scheidetrichter transferiert und viermal mit je 30 ml Hexan extrahiert. Die vereinigten Hexan-Phasen wurden mit 30 ml Methanol/Wasser (Vol. 80:20) zurückgewaschen. Die vereinigte Methanol-Phase enthaltend das gewünschte Produkt wurde mittels HPLC mit internem Standard analysiert. Sie enthielt 0,029 g (2,5%) nicht umgesetztes 3,7,11-Trimethyldodeca-1,4,6,10-tetraen-3-ol und 2,26 g (81,3%) 3,7,11-Trimethyldodeca-2,4,6,10-tetraen -1-yl-triphenylphosphoniumacetat bestehend aus 1,36 g (48,9%) 6Z-Isomer, 0,64 g (23,0%) all-E-Isomer und 0,26 g (9,4%) 2Z-Isomer. Rf-Wert 0,41 (Butylacetat/Ameisensäure/Wasser 88:10:2).

### Beispiel 3

Ein Gemisch von 2,45 g Triphenylphosphin, 25 ml Hexan und 4 ml Eisessig wurde auf 45°C erwärmt und unter Argon innert 10 Minuten tropfenweise mit 1,53 g 3,7,11-Trimethyldodeca-1,4E,6Z,10-tetraen-3-ol (Reinheit 76,6%) versetzt. Das Reaktionsgemisch wurde über Nacht bei 45°C weiter gerührt und dann am Rotationsverdampfer eingeengt. Der Rückstand wurde mit 50 ml Methanol/Wasser (Vol. 80:20) in einen Scheidetrichter transferiert und viermal mit je 30 ml Hexan extrahiert. Die vereinigten Hexan-Phasen wurden mit 30 ml Methanol/Wasser (Vol. 80:20) zurückgewaschen. Die vereinigte Methanol-Phase enthaltend das gewünschte Produkt wurde mittels HPLC mit internem Standard analysiert. Sie enthielt 0,03 g (3%) nicht umgesetztes 3,7,11-Trimethyldodeca-1,4,6,10-tetraen-3-ol und 2,14 g (77,0%) 3,7,11-Trimethyldodeca-2,4,6,10-tetraen -1-yl-triphenylphosphoniumacetat bestehend aus 1,22 g (43,9%) 6Z-Isomer, 0,67 g (24,1%) all-E-Isomer und 0,25 g (9,0%) 2Z-Isomer. Rf-Wert 0,41 (Butylacetat/Ameisensäure/Wasser 88:10:2).

### Beispiel 4

Ein Gemisch von 7,85 g Triphenylphosphin, 78,5 ml Hexan und 9,5 ml Ameisensäure wurde unter Rühren und Stickstoffbegasung bei 60°C innert 10 Minuten tropfenweise mit einer Lösung von 8,3 g 3,7,11-Trimethyldodeca-1,4E,6E,10-tetraen-3-ol (Reinheit 66,5%) in 8 ml Hexan versetzt. Das Reaktionsgemisch wurde noch 2,5 Stunden bei 60°C weiter gerührt und dann mit 125 ml Methanol/Wasser (Vol. 80:20) in einen Scheidetrichter gespült. Die Hexan-Phase wurde abgetrennt und die Methanol-Phase noch dreimal mit je 125 ml Hexan gewaschen. Die Hexan-Phasen wurden zweimal mit je 25 ml Methanol/Wasser (Vol. 80:20) nachextrahiert. Die Methanol-Phasen enthaltend 3,7,11-Trimethyldodeca-2,4,6,10-tetraen -1-yl-triphenylphosphoniumformiat [Rf-Wert 0,41 (Butylacetat/Ameisensäure/Wasser 88:10:2)] wurden vereinigt und eingedampft.

Der Rückstand wurde in 200 ml Methylenchlorid aufgenommen und, zwecks Ueberführung in das Chlorid, fünfmal mit je 250 ml 2-prozentiger Kochsalzlösung gewaschen. Die organische Phase wurde eingedampft und der Rückstand in Methanol aufgenommen und mittels HPLC mit internem Standard analysiert. Die Produktlösung enthielt 12,31 g (96,3%) 3,7,11-Trimethyldodeca-2,4,6,10-tetraen -1-yl-triphenylphosphoniumchlorid bestehend aus 7,97 g (62,3%) all-E-Isomer, 2,8 g (21,9%) 6Z-Isomer und 1,54 g (12.1%) 2Z-Isomer. Rf-Wert 0,41 (Butylacetat/Ameisensäure/Wasser 88:10:2).

### Beispiel 5

Ein Gemisch von 3,2 g Triphenylphosphin, 11,9 ml Methylenchlorid und 1,53 ml Ameisensäure wurde bei 30°C innert 60 Minuten tropfenweise mit 1,35 g 3,7,11-Trimethyldodeca-1,4E,6E,10-tetraen-3-ol (Reinheit 66,3%) versetzt. Das Gemisch wurde noch 17 Stunden bei 30°C weiter gerührt.

Anschliessend wurde das Reaktionsgemisch enthaltend 3,7,11-Trimethyldodeca-2,4,6,10-tetraen -1-yl-triphenylphosphoniumformiat [Rf-Wert 0,41 (Butylacetat/Ameisensäure/Wasser 88:10:2)] mit 50 ml Methylenchlorid in einen Scheidetrichter gespült und, zwecks Ueberführung in das Chlorid, zweimal mit je 125 ml 2-prozentiger Kochsalzlösung gewaschen. Die organische Phase wurde am Rotationsverdampfer eingeengt und der Rückstand in Methanol aufgenommen und mittels HPLC mit internem Standard analysiert. Die Produktlösung enthielt 1,69 g (81,8%) 3,7,11-Trimethyldodeca-2,4,6,10-tetraen -1-yl-triphenylphosphoniumchlorid bestehend aus 1,14 g (55,1%) all-E-Isomer, 0,32 g (15,6%) 2Z-Isomer und 0,23 g (11,1%) 6Z-Isomer. Rf-Wert 0,41 (Butylacetat/Ameisensäure/Wasser 88:10:2).

### Beispiel 6

Ein Gemisch von 2,27 g Triphenylphosphin, 22,5 ml Toluol und 0,85 ml Ameisensäure wurde bei 55°C innert 5 Minuten tropfenweise mit 1,1 g 3,7,11-Trimethyldodeca-1,4E,6Z,10-tetraen-3-ol (Reinheit ca. 75%) versetzt. Hierbei stieg die Temperatur auf 60°C. Das Gemisch wurde noch 2,5 Stunden bei 60°C weiter gerührt.

Anschliessend wurde das Reaktionsgemisch enthaltend 3,7,11-Trimethyldodeca-2,4,6,10-tetraen -1-yl-triphenylphosphoniumformiat [Rf-Wert 0,41 (Butylacetat/Ameisensäure/Wasser 88:10:2) mit 50 ml Toluol in einen Scheidetrichter gespült und, zwecks Ueberführung in das Chlorid, zweimal mit je 125 ml 2-prozentiger Kochsalzlösung gewaschen. Die organische Phase wurde am Rotationsverdampfer eingeengt und der Rückstand in Methanol aufgenommen und mittels HPLC mit internem Standard analysiert. Die Produktlösung enthielt 1,618 g (84,2%) 3,7,11-Trimethyldodeca-2,4,6,10-tetraen -1-yl-triphenylphosphoniumchlorid bestehend aus 0,931 g (48,2%) 6Z-Isomer, 0,480 g (25,2%) all-E-Isomer und 0,207 g (10,8%) 2Z-Isomer. Rf-Wert 0,41 (Butylacetat/Ameisensäure/Wasser 88:10:2).

### Beispiel 7

Ein Gemisch von 3,54 g Triphenylphosphin, 50 ml t-Butylmethyläther und 3,32 g 3,7,11-Trimethyldodeca-1,4E,6E,10-tetraen-3-ol (Reinheit 66,3%) wurde bei 53°C innert 35 Minuten tropfenweise mit einer Lösung von 1,30 ml Bortrifluorid-Diathylätherat in 25 ml t-Butylmethyläther versetzt. Das Gemisch wurde noch 2,5 Stunden bei 53°C weiter gerührt und dann am Rotationsverdampfer eingeengt. Der Rückstand wurde mit 80 ml Methanol/Wasser (Vol. 80:20) in einen Scheidetrichter gespült und viermal mit je 50 ml Hexan extrahiert. Die Hexan-Phasen wurden vereinigt und zweimal mit je 10 ml Methanol/Wasser (Vol. 80:20) zurückgewaschen. Die Methanol-Phasen enthaltend 3,7,11-Trimethyldodeca-2,4,6,10-tetraen -1-yl-triphenylphosphoniumhydroxytrifluoroborat [Rf-Wert 0,41 (Butylacetat/Ameisensäure/Wasser 88:10:2)] wurden am Rotationsverdampfer eingeengt.

Der Rückstand wurde mit 80 ml Methylenchlorid in einen Scheidetrichter gespült und, zwecks Ueberführung in das Chlorid, dreimal mit je 125 ml 2-prozentiger Kochsalzlösung gewaschen. Die organische Phase wurde am Rotationsverdampfer eingeengt und der Rückstand in Methanol aufgenommen und mittels HPLC mit internem Standard analysiert. Die Produktlösung enthielt 3,404 g (61,9%) 3,7,11-Trimethyldodeca-2,4,6,10-tetraen -1-yl-triphenylphosphoniumchlorid bestehend aus 2,403 g (43,7%) all-E-Isomer, 0,528 g (9,6%) 2Z-Isomer und 0,473 g (8,6%) 6Z-Isomer. Rf-Wert 0,41 (Butylacetat/Ameisensäure/Wasser 88:10:2).

### Beispiel 8

41,2 g 3,7,11-Trimethyldodeca-2,4,6,10-tetraen -1-yl-triphenylphosphoniumchlorid (hergestellt nach Beispiel 1) und 5,4 g 2,7-Dimethyl-2E,4E,6E-octatriendial wurden in 410 ml Methylenchlorid gelöst. Die Lösung wurde auf -5°C gekühlt und innert 15 Minuten tropfenweise mit 25,1 g Natriummethylat-Lösung (enthaltend 4,7 g Natriummethylat in 20,4 g Methanol) versetzt. Das Reaktionsgemisch wurde 30 Minuten bei -5°C weitergerührt, dann innert 10 Minuten auf 20°C erwärmt und noch 60 Minuten bei 20°C weitergerührt. Anschliessend wurde das Reaktionsgemisch in einen Scheidetrichter transferiert und zweimal mit je 300 ml 1-prozentiger Kochsalzlösung gewaschen. Die organische Phase wurde am Rotationsverdampfer auf ein Volumen von 100 ml eingeengt. Anschliessend wurde das Methylenchlorid unter Normaldruck weiter abgedampft und durch Methanol ersetzt. Das Gemisch wurde abkühlen gelassen und zur Vervollständigung der Kristallisation über Nacht bei 5°C aufbewahrt. Das Kristallisat wurde abgenutscht und mit 50 ml Methanol gewaschen. Hierbei wurden 18,2 g Lycopin in einer Reinheit von 86,1% (gemäss HPLC mit internem Standard) erhalten. Die Ausbeute betrug 89,0% bezogen auf 2,7-Dimethyl-2E,4E,6E-octatriendial. Die Mutterlauge, welche noch 2% Lycopin enthielt, wurde nicht aufgearbeitet.

### Beispiel 9

Ein Gemisch von 5,25 g Triphenylphosphin und 52,5 ml Eisessig wurde auf 55°C erwärmt und dann innert 10 Minuten tropfenweise mit 2,34 g 3,7,11-Trimethyldodeca-1,4E,6E,10-tetraen-3-ol (Reinheit 84,4%) versetzt. Das Reaktionsgemisch wurde noch 2,5 Stunden bei 60°C gerührt, dann auf Raumtemperatur gekühlt und am Rotationsverdampfer weitgehend eingeengt. Der Rückstand, welcher noch etwas Eisessig enthielt, wurde mit 100 ml Hexan und 100 ml Methanol/Wasser (Vol. 80:20) in einen Scheidetrichter gespült und dreimal mit je 100 ml Hexan extrahiert. Die vereinigten Hexanphasen wurden zweimal mit je 10 ml Methanol/Wasser (Vol. 80:20) zurückgewaschen und dann am Rotationsverdampfer eingeengt. Der Rückstand wurde sofort in 100 ml Methylenchlorid aufgenommen. Die Methylenchloridphase wurde mit Wasser gewaschen und am Rotationsverdampfer eingeengt. Hierbei wurden 4,0 g Rohprodukt von 3,7,11-Trimethyldodeca-2,4,6,10-tetraen -1-yl-triphenylphosphoniumacetat erhalten, welches sofort weiter umgesetzt wurde.

Das erhaltene Phosphoniumacetat und 0,5 g 2,7-Dimethyl-2E,4E,6E-octatriendial wurden in 40 ml Methylenchlorid gelöst. Die Lösung wurde auf -10°C gekühlt und innert 5 Minuten tropfenweise mit 2,4 g Natriummethylat-Lösung (enthaltend 0,44 g Natriummethylat in 1,96 g Methanol) versetzt. Das Reaktionsgemisch wurde 2,5 Stunden bei -10°C weitergerührt, dann auf Raumtemperatur erwärmt und mit 70 ml Wasser versetzt. Anschliessend wurde das Reaktionsgemisch mit Methylenchlorid in einen Scheidetrichter transferiert und die wässrige Phase abgetrennt. Das erhaltene Lycopin wurde durch Dünnschichtchromatographie nachgewiesen; Rf-Wert 0,92 (Methylenchlorid/Diäthyläther 99:1).

## Patentansprüche

1. Phosphoniumsalze der allgemeinen Formel 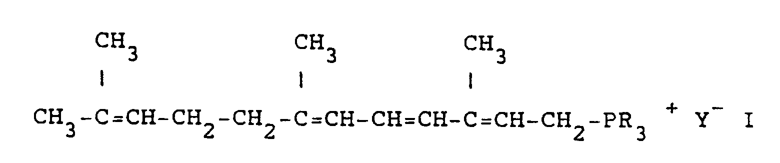 worin R Aryl und Y⁻ C₁-C₆-Alkanoat oder Hydroxytrifluoroborat bedeuten.

2. Phosphoniumsalze nach Anspruch 1, dadurch gekennzeichnet, dass Y⁻ Acetat, Formiat oder Hydroxytrifluoroborat bedeutet.

3. Phosphoniumsalze nach Anspruch 1 oder 2, dadurch gekennzeichnet, dass R Phenyl bedeutet.

4. Phosphoniumsalze nach einem der Ansprüche 1 bis 3 in der all-E-Form.

5. Verfahren zur Herstellung eines Phosphoniumsalzes der allgemeinen Formel I gemäss Anspruch 1, dadurch gekennzeichnet, dass man 3,7,11-Trimethyldodeca-1,4,6,10-tetraen-3-ol der Formel 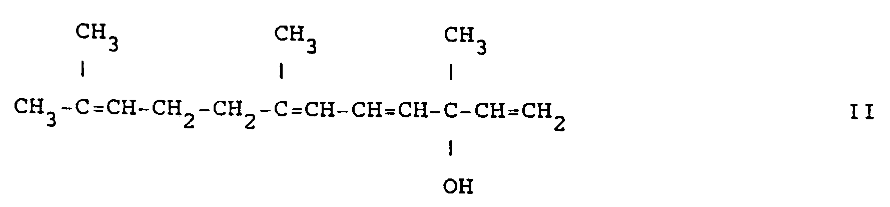 mit Triarylphosphin und mit C₁-C₆-Alkansäure oder Bortrifluorid-Aetherat umsetzt.

6. Verfahren nach Anspruch 5, dadurch gekennzeichnet, dass man die Umsetzung zum Phosphoniumalz der Formel I mit Ameisensäure, Essigsäure oder Bortrifluorid-Diäthylätherat durchführt.

7. Verfahren nach Anspruch 5 oder 6, dadurch gekennzeichnet, dass man die Umsetzung mit Triphenylphosphin durchführt.

8. Verfahren nach einem der Ansprüche 5 bis 7, dadurch gekennzeichnet, dass man die Umsetzung zum Phosphoniumsalz der Formel I bei 0-100°C, vorzugsweise bei 40-80°C durchführt.

9. Verfahren nach einem der Ansprüche 5 bis 8, dadurch gekennzeichnet, dass man 3,7,11-Trimethyldodecal-1,4E,6E,10-tetraen-3-ol umsetzt.

10. Verwendung eines Phosphoniumsalzes gemäss einem der Ansprüche 1 bis 4 zur Herstellung von Lycopin, dadurch gekennzeichnet, dass man das Phosphoniumsalz mit 2,7-Dimethyl-2,4,6-octatriendial umsetzt.

11. Verwendung eines Phosphoniumsalzes gemäss einem der Ansprüche 1 bis 4 zur Herstellung von Lycopin, dadurch gekennzeichnet, dass man das Phosphoniumsalz zunächst in das Phosphoniumsalz einer starken Säure, vorzugsweise in das Chlorid, Bromid, Sulfat, Hydrogensulfat, Phosphat oder ein Sulfonat, überführt und dann das erhaltene Phosphoniumsalz mit 2,7-Dimethyl-2,4,6-octatriendial zu Lycopin umsetzt.

## Claims

1. Phosphonium salts of the general formula 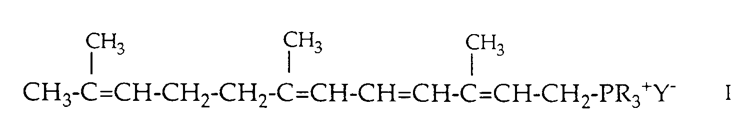 wherein R signifies aryl and Y⁻ signifies C₁-C₆-alkanoate or hydroxytrifluoroborate.

2. Phosphonium salts according to claim 1, characterized in that Y⁻ signifies acetate, formate or hydroxytrifluoroborate.

3. Phosphonium salts according to claim 1 or 2, characterized in that R signifies phenyl.

4. Phosphonium salts according to any one of claims 1 to 3 in the all-E form.

5. A process for the manufacture of a phosphonium salt of general formula I in accordance with claim 1, characterized by reacting 3,7,11-trimethyldodeca-1,4,6,10-tetraen-3-ol of the formula 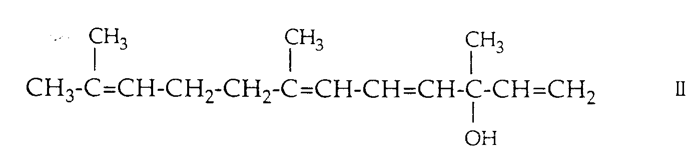 with a triarylphosphine and with a C₁-C₆-alkanoic acid or a boron trifluoride etherate.

6. A process according to claim 5, characterized in that the reaction to give the phosphonium salt of formula I is carried out using formic acid, acetic acid or boron trifluoride diethyl etherate.

7. A process according to claim 5 or 6, characterized in that the reaction is carried out using triphenylphosphine.

8. A process according to any one of claims 5 to 7, characterized in that the reaction to give the phosphonium salt of formula I is carried out at 0-100°C, preferably at 40-80°C.

9. A process according to any one of claims 5 to 8, characterized in that 3,7,11-trimethyldodeca-1,4E,6E,10-tetraen-3-ol is reacted.

10. The use of a phosphonium salt in accordance with any one of claims 1 to 4 for the manufacture of lycopene, characterized by reacting the phosphonium salt with 2,7-dimethyl-2,4,6-octatrienedial.

11. The use of a phosphonium salt in accordance with any one of claims 1 to 4 for the manufacture of lycopene, characterized by firstly converting the phosphonium salt into the phosphonium salt of a strong acid, preferably into the choride, bromide, sulphate, hydrogen sulphate, phosphate or a sulphonate, and then reacting the phosphonium salt obtained with 2,7-dimethyl-2,4,6-octatrienedial to give lycopene.

## Revendications

1. Sels de phosphonium de formule générale 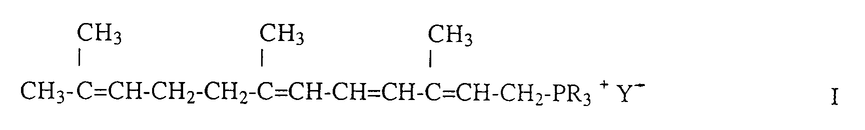 où R représente un aryle et Y⁻ un alcanoate en C₁-C₆ ou un hydroxytrifluoroborate.

2. Sels de phosphonium selon la revendication 1, caractérisés en ce que Y⁻ représente l'acétate, le formiate ou l'hydroxytrifluoroborate.

3. Sels de phosphonium selon la revendication 1 ou 2, caractérisés en ce que R représente le phényle.

4. Sels de phosphonium selon l'une des revendications 1 à 3 sous la forme tout E.

5. Procédé pour la préparation d'un sel de phosphonium de formule générale I selon la revendication 1, caractérisé en ce que l'on fait réagir le 3,7,11-triméthyldodéca-1,4,6,10-tétraén-3-ol de formule 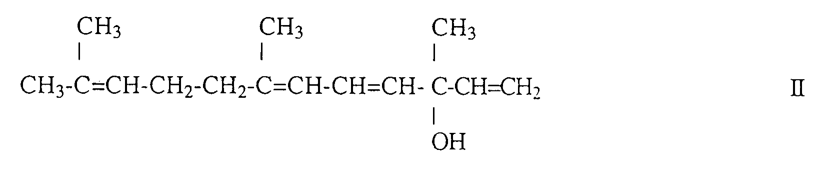 avec une triarylphosphine et avec un acide alcanoïque en C₁-C₆ ou le trifluorure de bore-éthérate,

6. Procédé selon la revendication 5, caractérisé en ce que l'on effectue la réaction conduisant au sel de phosphonium de formule I avec de l'acide formique, de l'acide acétique ou avec le trifluorure de bore-éthérate de diéthyle.

7. Procédé selon la revendication 5 ou 6, caractérisé en ce que l'on effectue la réaction avec la triphénylphosphine.

8. Procédé selon l'une des revendications 5 à 7, caractérisé en ce que l'on effectue la réaction conduisant au sel de phosphonium de formule I à une température comprise entre 0 et 100°C, de préférence entre 40 et 80°C.

9. Procédé selon l'une des revendications 5 à 8, caractérisé en ce que l'on fait réagir le 3,7,11-triméthyldodéca-1,4E,6E,10-tétraén-3-ol.

10. Utilisation d'un sel de phosphonium selon l'une des revendications 1 à 4 pour la préparation de la lycopine, caractérisée en ce que l'on fait réagir le sel de phosphonium avec le 2,7-diméthyl-2,4,6-octatriènedial.

11. Utilisation d'un sel de phosphonium selon l'une des revendications 1 à 4 pour la préparation de la lycopine, caractérisée en ce que l'on transforme tout d'abord le sel de phosphonium en un sel de phosphonium d'un acide fort, de préférence en chlorure, bromure, sulfate, sulfate acide, phosphate ou en un sulfonate, puis en ce que l'on fait réagir le sel de phosphonium obtenu avec le 2,7-diméthyl-2,4,6-octatriénedial pour former la lycopine.
